(19) Europäisches Patentamt
European Patent Office
Office européen des brevets

(11) **EP 3 893 065 A1**

(12) **EUROPÄISCHE PATENTANMELDUNG**

(43) Veröffentlichungstag:
**13.10.2021 Patentblatt 2021/41**

(51) Int Cl.:
***G05B 19/042*** *(2006.01)*

(21) Anmeldenummer: **21165865.3**

(22) Anmeldetag: **30.03.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **06.04.2020 DE 102020109537**

(71) Anmelder: **Krohne Messtechnik GmbH**
**47058 Duisburg (DE)**

(72) Erfinder:
• **Goertz, Werner**
**46282 Dorsten (DE)**
• **Arndt, Daniel**
**41366 Schwalmtal (DE)**

(74) Vertreter: **Gesthuysen Patentanwälte**
**Patentanwälte**
**Huyssenallee 100**
**45128 Essen (DE)**

(54) **VERFAHREN ZUR BEZAHLBASIERTEN AUSFÜHRUNG EINER DURCHZUFÜHRENDEN FUNKTION EINES FELDGERÄTES, ENTSPRECHENDES FELDGERÄT UND SERVICEEINHEIT**

(57) Dargestellt und beschrieben ist ein Verfahren (1) zur bezahlbasierten Ausführung einer durchzuführenden Funktion (FLi) eines Feldgerätes (F), wobei das Feldgerät (F) eine Kennung (SN) aufweist, wobei das Feldgerät (F) mit einem Prozessleitsystem (PCS) über einen ersten Kommunikationskanal (4) verbunden ist. Die Freigabe und Durchführung einer beispielsweise durch Bezahlung freigeschalteten Funktionalität auf dem Feldgerät ohne einen unmittelbaren Zugang zu dem Feldgerät über den ersten Kommunikationskanal (4) hinaus, wird dadurch realisisert, dass das Prozessleitsystem (PCS) über einen zweiten Kommunikationskanal (5) mit einer Serviceeinheit (S) verbunden ist und wobei das Feldgerät (F) und die Serviceeinheit (S) jeweils wenigstens eine Zeitzählvorrichtung (7, 8) aufweisen und wobei die Zeitzählvorrichtungen (7, 8) miteinander synchronisiert sind und jeweils einen Zeitwert (CLF) des Feldgeräts (F) und einen Zeitwert (CLS) der Serviceeinheit (S) bereitstellen, dass in einem Auswahlschritt (9) das Prozessleitsystem (PCS) die auf dem Feldgerät (F) durchzuführende Funktion (FLi(SN)) aus einer dem Prozessleitsystem (PCS) zur Verfügung stehenden Auswahlliste durchführbarer Funktionen (FL(SN)) des Feldgerätes (F) auswählt und das Prozessleitsystem (PCS) die ausgewählte Funktion (FLi(SN)) der Serviceeinheit (S) mitteilt, dass in einem Zahlungsschritt (10) ein für die durchzuführende Funktion (FLi(SN)) vorgegebener Zahlungsbetrag durch einen Zahlungsdienst (PAY) entrichtet wird und die Zahlung des Zahlungsbetrags von dem Zahlungsdienst (PAY) an die Serviceeinheit (S) durch Übermittlung einer Bestätigungsinformation (PAID) bestätigt wird, dass in einem Aufforderungsschritt (11) die Serviceeinheit (S) einen von dem aktuellen Zeitwert (CLS) der Serviceeinheit (S) abhängigen abgeleiteten Zeitwert (CLS') der Serviceeinheit (S) und von der durchzuführenden Funktion (FLi(SN)) abhängigen Freigabecode (FC) ermittelt und den Freigabecode (FC) an das Prozessleitsystem (PCS) übermittelt, dass in einem Weiterleitungsschritt (12) das Prozessleitsystem (PCS) den Freigabecode (FC) an das Feldgerät (F) weiterleitet, dass in einem Prüfschritt (13) das Feldgerät (F) einen von dem aktuellen Zeitwert (CLF) des Feldgeräts (F) abhängigen abgeleiteten Zeitwert (CLF') des Feldgeräts (F) ermittelt und den Freigabecode (FC) unter Verwendung des abgeleiteten Zeitwerts (CLF') des Feldgeräts (F) daraufhin überprüft, ob der Freigabecode (FC) von der Serviceeinheit (S) erzeugt ist, und dass das Feldgerät (F) aus dem Freigabecode (FC) die durchzuführende Funktion (FLi(SN)) ermittelt und dass das Feldgerät (F) in einem Ausführungsschritt (14) in dem Fall, dass der von dem Feldgerät (F) empfangene Freigabecode (FC) als von der Serviceeinheit (S) erzeugt verifiziert ist, einen der durchzuführenden Funktion (FLi(SN)) entsprechenden ausführbaren Code (FLi(SN)CD) ausführt.

EP 3 893 065 A1

Fig. 2

**Beschreibung**

Die Erfindung betrifft ein Verfahren zur bezahlbasierten Ausführung einer durchzuführenden Funktion eines Feldgerätes, wobei das Feldgerät eine Kennung aufweist und wobei das Feldgerät mit einem Prozessleitsystem über einen ersten Kommunikationskanal verbunden ist. Darüber hinaus betrifft die Erfindung auch ein Feldgerät mit einer Recheneinheit zur Ausführung einer durchzuführenden Funktion des Feldgeräts und mit einer Kommunikationsschnittstelle zum Datenaustausch mit einem Prozessleitsystem. Ferner betrifft die Erfindung auch eine Serviceeinheit mit einer Recheneinheit und mit einer Zeitzählvorrichtung.

Derartige Anordnungen von - meist einer Vielzahl von - Feldgeräten, die mit einem Prozessleitsystem verbunden sind, die üblicherweise über ein standardisiertes Feldbussystem, das beispielsweise gemäß dem seriellen HART-Protokoll über eine Stromschnittstelle (4-20 mA-Schnittstelle) arbeitet, sind seit vielen Jahren unter anderem aus dem Bereich der industriellen Prozess-und Automatisierungstechnik bekannt. Bei den Feldgeräten handelt es sich häufig um Messgeräte, die Zustandsgrößen eines industriellen Prozesses als Messgrößen erfassen und über den ersten Kommunikationskanal anderen Feldgeräten und/oder dem Prozessleitsystem mitteilen. Bei den Feldgeräten kann es sich aber auch um Aktuatoren handeln, die über den ersten Kommunikationskanal Vorgaben für Stellgrößen erhalten und dann unmittelbar als Stellglieder auf den Prozess einwirken, den es in gewünschter Weise zu beeinflussen gilt, beispielsweise in Form einer Regelung. Bei der angesprochenen Kennung des Feldgerätes kann es sich beispielsweise um seine Seriennummer handeln. Es kann sich bei der Kennung aber auch um eine während der Installation des Feldgerätes in seiner Prozessumgebung vergebene Kennung handeln. wichtig ist, dass das Feldgerät eindeutig über seine Kennung identifizierbar ist.

Aus ganz unterschiedlichen Gründen kann ein Feldgerät über Funktionalitäten verfügen, die nicht dauerhaft freigeschaltet sind. Es kann sich hier um Funktionalitäten handeln, die dem regulären Betreiber des Feldgerätes, also dem Anwender, nicht dauerhaft zugänglich sein sollen, beispielsweise zur Parametrisierung und Diagnose des Feldgerätes. Es ist auch möglich, dass das Feldgerät - beispielsweise aus Kostengründen - nur mit einer freigeschalteten Basisfunktionalität von dem Anbieter des Feldgerätes erworben worden ist, es sich im Verlauf des Betriebes des Feldgerätes aber herausgestellt hat, dass ursprünglich nicht dauerhaft freigeschaltete Funktionalitäten nun vorteilhaft angewendet werden könnten, sodass der Wunsch besteht, auf diese Funktionalitäten - je nach Bedarf und unter Umständen auch nur zeitweise - zugreifen zu können und diese Funktionalitäten auf dem Feldgerät auszuführen. Es kann beispielsweise gewünscht sein, dass Feldgerät mit einer höheren Abtastrate zu betreiben, von dem Feldgerät zusätzliche Sensorinformationen abzurufen und von dem Feldgerät Diagnoseinformationen zu erhalten usw.

Aus dem Stand der Technik ist bekannt, das auf dem Feldgerät noch nicht ausführbare Funktionalitäten nach Entrichtung eines entsprechenden Bezahlbetrages, beispielsweise an den Anbieter des Feldgerätes, auf dem Feldgerät freigeschaltet wird. Dazu wird ein entsprechender Freischaltcode erzeugt, der auf das Feldgerät übertragen wird, und der auf dem Feldgerät bewirkt, dass die gewünschte und nunmehr bezahlte Funktionalität verfügbar ist und ausgeführt wird. Dazu ist es erforderlich, ein Bediengerät an das Feldgerät anzuschließen, um den Freischaltcode auf das Feldgerät zu übertragen. Diese Vorgehensweise ist aufwendig, da sich entsprechendes Bedienungspersonal zu dem entsprechenden Feldgerät begeben muss. Da Feldgeräte in dem eingangs beschriebenen Anwendungsfall zudem fest in einem technischen Prozess verbaut sind, sind sie häufig auch schlecht zugänglich. Ferner ist zu berücksichtigen, dass ein Zugang von Personen in die technische Anlage, in der das entsprechende Feldgerät verbaut ist, unerwünscht ist, beispielsweise weil es sich um einen Gefahrenbereich handelt oder auch um einen Bereich, der unter die betriebliche Geheimhaltung fällt. dazu kommt, dass die durch Bezahlung erworbene Funktionalität im Stand der Technik auch nicht wieder ohne weiteres deaktiviert werden kann, sodass eine zeitlich begrenzte Nutzung der gewünschten Funktionalität auch nicht möglich ist.

Aufgabe der vorliegenden Erfindung ist es daher, für die eingangs beschriebene gerätetechnische Anordnung ein Verfahren anzugeben, mit dem es möglich ist, ohne einen unmittelbaren Zugang zu dem Feldgerät, eine beispielsweise durch Bezahlung erworbene Funktionalität auf dem Feldgerät durchzuführen.

Zur Lösung der zuvor aufgezeigten und hergeleiteten Aufgabe ist zunächst bei der eingangs genannten gerätetechnischen Anordnung vorgesehen, dass das Prozessleitsystem über einen zweiten Kommunikationskanal mit einer Serviceeinheit verbunden ist und dass das Feldgerät und die Serviceeinheit jeweils wenigstens eine Zeitzählvorrichtung aufweisen und wobei die Zeitzählvorrichtungen miteinander synchronisiert sind und jeweils einen Zeitwert des Feldgeräts und einen Zeitwert der Serviceeinheit bereitstellen. Mit den Zeitzählvorrichtungen wird die gerätetechnische Voraussetzung geschaffen, eine zeitbasierte Durchführung einer gewünschten Funktionalität des Feldgerätes zu ermöglichen. Bei der Serviceeinheit kann es sich beispielsweise um ein Datenverarbeitungssystem des Anbieters des Feldgerätes handeln, das zum Beispiel über eine Internetverbindung mit dem Prozessleitsystem des Anlagenbetreibers verbunden ist. Das Prozessleitsystem stammt in der industriellen Praxis nicht unbedingt von dem Anbieter des hier betrachteten Feldgerätes. Vielmehr können auf Grundlage standardisierter Kommunikationstechniken, insbesondere durch eine Standardisierung des ersten Kommunikationskanals, Feldgeräte verschiedener Hersteller im Rahmen eines gemeinsamen Prozessleitsystems kollisionsfrei betrieben werden. Die Serviceeinheit kann dann auch als separates, also beispielsweise softwaremäßig getrenntes Modul im Rahmen der Rechnerhardware des Prozessleitsystems realisiert sein, also als logisches Funktionsmodul. Wichtig ist an dieser Stelle hervorzuheben, dass zur Durchführung des nachfolgend beschriebenen Verfahrens keine weitere direkte Kommunikationsverbindung zu dem Feldgerät erforderlich ist, anders also als bei aus dem Stand der Technik bekannten Lösungen.

Das erfindungsgemäße Verfahren sieht zunächst in einem Auswahlschritt vor, dass das Prozessleitsystem die auf dem Feldgerät durchzuführende Funktion aus einer dem Prozessleitsystem zur Verfügung stehenden Auswahlliste durchführbarer Funktionen des Feldgerätes auswählt und dass das Prozessleitsystem die ausgewählte Funktion der Serviceeinheit mitteilt. Hier wird zunächst die Frage außer Acht gelassen, wie das Prozessleitsystem Kenntnis von der Auswahlliste durchführbarer Funktionen des Feldgerätes erhält, es wird zunächst davon ausgegangen, dass dem Prozessleitsystem diese Auswahlliste vorliegt.

Ferner ist vorgesehen, dass in einem Zahlungsschritt ein für die durchzuführende Funktion vorgegebener Zahlungsbetrag durch einen Zahlungsdienst entrichtet wird und die Zahlung des Zahlungsbetrags von dem Zahlungsdienst an die Serviceeinheit durch Übermittlung einer Bestätigungsinformation bestätigt wird. Der Zahlungsbetrag kann beispielsweise Bestandteil der Auswahlliste sein, wobei jeder auswählbaren durchzuführenden Funktion ein entsprechender Zahlungsbetrag zugeordnet ist.

Darauf folgt in einem Aufforderungsschritt, dass die Serviceeinheit einen von dem aktuellen Zeitwert der Serviceeinheit abhängigen abgeleiteten Zeitwert der Serviceeinheit und von der durchzuführenden Funktion abhängigen Freigabecode ermittelt und den Freigabecode an das Prozessleitsystem übermittelt. Im einfachsten Fall ist der von dem aktuellen Zeitwert der Serviceeinheit abhängige abgeleitete Zeitwert der Serviceeinheit identisch mit dem aktuellen Zeitwert der Serviceeinheit. In fortgeschrittenen Varianten des Verfahrens werden zur Ableitung des abgeleiteten Zeitwertes beispielsweise kryptografische Algorithmen eingesetzt.

In einem Weiterleitungsschritt leitet das Prozessleitsystem dann den Freigabecode an das Feldgerät weiter. Hier kommt zum Ausdruck, dass zur Durchführung des Verfahrens keine andere Verbindung zu dem Feldgerät vorhanden sein muss als die Verbindung, die ohnehin zwischen dem Feldgerät und dem Prozessleitsystem besteht. Die geschützte Umgebung des Betreibers des Feldgerätes, die das Feldgerät und auch das Prozessleitsystem umfasst, muss also gerätetechnisch nicht verändert werden, um das hier vorgestellte Verfahren durchführen zu können.

Das erfindungsgemäße Verfahren zeichnet sich ferner dadurch aus, dass in einem Prüfschritt das Feldgerät einen von dem aktuellen Zeitwert des Feldgeräts abhängigen abgeleiteten Zeitwert des Feldgeräts ermittelt und den Freigabecode unter Verwendung des abgeleiteten Zeitwerts des Feldgeräts daraufhin überprüft, ob der Freigabecode von der Serviceeinheit erzeugt ist, und dass das Feldgerät aus dem Freigabecode die durchzuführende Funktion ermittelt.

Dadurch, dass zur Überprüfung, ob der Freigabecode von der Serviceeinheit erzeugt worden ist, der abgeleitete Zeitwert des Feldgeräts herangezogen wird, ist es besonders einfach möglich, die ausgewählte Funktionalität des Feldgeräts unter Vorgabe exakter zeitlicher Randbedingungen auszuführen (zum Beispiel Startzeit, Dauer und Endzeit). Die Einhaltung zeitlicher Randbedingungen bei der Ausführung der ausgewählten Funktionalitäten des Feldgerätes lässt sich auch auf anderem Wege realisieren, dies hängt nicht notwendig von der Verwendung des abgeleiteten Zeitwertes zur Ermittlung des Freigabecodes ab.

Schließlich ist erfindungsgemäß vorgesehen, dass das Feldgerät in einem Ausführungsschritt in dem Fall, dass der von dem Feldgerät empfangene Freigabecode als von der Serviceeinheit erzeugt verifiziert ist, einen der durchzuführenden Funktion entsprechenden ausführbaren Code ausführt.

Wie bereits zuvor ausgeführt, bietet das erfindungsgemäße Verfahren erhebliche Vorteile, da zur - zeitweisen - Durchführung der ausgewählten Funktionalität des Feldgeräts keine Verbindung zu dem Feldgerät hergestellt werden muss als die, die zwingend zwischen dem Feldgerät und dem Prozessleitsystem schon existiert.

Ferner ist es aufgrund des Zeitbezuges auf Grundlage der synchronisierten Zeitzählvorrichtungen auf dem Feldgerät auf der Serviceeinheit besonders einfach möglich, die Ausführung der ausgewählten Funktionalität des Feldgerätes mit zeitlichen Randbedingungen zu versehen, die Ausführung der ausgewählten Funktionalität kann also auch wieder beendet werden, beispielsweise nach einem vorgegebenen - bezahlten - Zeitintervall oder nach einer Anzahl von Durchführungen. Mit dem Verfahren ist es auch möglich, ein Feldgerät praktisch ohne jede Funktionalität auszuliefern und gewünschte Funktionalitäten erst im Feld, je nach Bedarf, freizuschalten.

Bei einer bevorzugten Ausgestaltung des Verfahrens ist vorgesehen, dass auf der Serviceeinheit mehrere Auswahllisten durchführbarer Funktionen mehrerer Feldgeräte hinterlegt sind. Wenn es sich bei der Serviceeinheit um ein Datenbanksystem des Anbieters der Feldgeräte handelt, dann kann die Serviceeinheit beispielsweise über alle Auswahllisten aller Feldgeräte des Anbieters verfügen. Im Auswahlschritt fordert das Prozessleitsystem von der Serviceeinheit die Auswahlliste durchführbarer Funktionen des Feldgeräts mit der Kennung SN an. Das ist ohne Weiteres möglich, wenn in der Serviceeinheit jede Auswahlliste eines Feldgerätes beispielsweise durch Hinterlegung der Kennung SN des jeweiligen Feldgerätes eindeutig dem Feldgerät mit der Kennung SN zuordenbar ist. Die Serviceeinheit stellt dem Prozessleitsystem dann die angeforderte Auswahlliste durchführbarer Funktionen des Feldgeräts mit der Kennung SN zur Verfügung. Im Prozessleitsystem wird dann aus der Auswahlliste durchführbarer Funktionen die gewünschte und auf dem Feldgerät durchzuführende Funktion ausgewählt. Die Auswahlliste umfasst für jede aufgelistete Feldgerätefunktion idealerweise auch eine entsprechende Preisinformation.

Nachfolgend werden zwei grundsätzlich verschiedene Varianten des zuvor beschriebenen allgemeinen Verfahrens beschrieben. Bei der ersten Variante ist es erforderlich, dass auf dem Feldgerät selbst eine Auswahlliste durchführbare Funktionen genau dieses Feldgerätes hinterlegt ist. Bei der sich davon unterscheidenden zweiten Variante muss eine solche Auswahlliste nicht auf dem Feldgerät hinterlegt sein.

Gemäß der der ersten Variante entsprechenden Ausgestaltung des Verfahrens ist also vorgesehen, dass in dem Feldgerät die Auswahlliste durchführbarer Funktionen des Feldgerätes mit der Kennung des Feldgerätes hinterlegt ist zusammen mit einer entsprechenden Beschreibung jeder einzelnen durchführbaren Funktion. Bei der Beschreibung kann es sich zum Beispiel nur um eine eindeutige Kennzeichnung der Funktion, den Funktionsnamen mit entsprechender Parametrierung oder auch um den Funktionscode handeln. Auch in der Serviceeinheit ist die Auswahlliste durchführbarer Funktionen des Feldgerätes hinterlegt. Im Aufforderungsschritt stellt die Serviceeinheit den Freigabecode zusammen aus dem aktuellen abgeleiteten Zeitwert der Serviceeinheit und einer Angabe zur ausgewählten Funktion des Feldgerätes.

Da in dem Feldgerät die Auswahlliste durchführbarer Funktionen des Feldgerätes hinterlegt ist, fordert in einer Weiterentwicklung des Verfahrens das Prozessleitsystem im Auswahlschritt von dem verbundenen Feldgerät die Auswahlliste durchführbarer Funktionen des Feldgeräts an. Das Feldgerät stellt dem Prozessleitsystem dann die angeforderte Auswahlliste durchführbarer Funktionen des Feldgeräts zur Verfügung. Im Prozessleitsystem wird dann aus der Auswahlliste durchführbarer Funktionen die gewünschte und auf dem Feldgerät durchzuführende Funktion ausgewählt.

Wenn der so zusammengestellte Freigabecode zu dem Prozessleitsystem übertragen wird, hat das Prozessleitsystem grundsätzlich die Möglichkeit, die in dem Freigabecode enthaltene Information über die ausgewählte durchzuführende Funktion zu überprüfen, bevor der Freigabecode dann von dem Prozessleitsystem über den ersten Kommunikationskanal, also das Feldbussystem, an das Feldgerät übermittelt wird. Dies kann eine durchaus interessante Eigenschaft sein, weil der Verwender des Feldgerätes und damit der Betreiber des Prozessleitsystems so eine unmittelbare Kontrolle über die Beeinflussung des betreffenden Feldgerätes hat.

Im Prüfschritt ermittelt das Feldgerät aus dem übermittelten Freigabecode einen übermittelten abgeleiteten Zeitwert der Serviceeinheit und das Feldgerät ermittelt ferner den aktuellen abgeleiteten Zeitwert des Feldgerätes. Bei Übereinstimmung des übermittelten abgeleiteten Zeitwertes der Serviceeinheit mit dem aktuellen abgeleiteten Zeitwert des Feldgerätes verifiziert das Feldgerät den übermittelten Freigabecode als von der Serviceeinheit erzeugt.

Im Ausführungsschritt führt das Feldgerät entsprechend der in dem Feldgerät hinterlegten Beschreibung zu der übermittelten durchzuführenden Funktion den korrespondierenden ausführbaren Code der durchzuführenden Funktion aus. Je nach Anzahl der durchführbaren Funktionalitäten auf dem Feldgerät kann die Auswahlliste der durchführbaren Funktionalitäten sehr umfangreich sein, was bei der Auslegung der Speicherausstattung des Feldgerätes berücksichtigt werden muss.

Eine vorteilhafte Weiterentwicklung dieser Verfahrensvariante zeichnet sich dadurch aus, dass der aktuelle abgeleitete Zeitwert auf der Serviceeinheit und der aktuelle abgeleitete Zeitwert auf dem Feldgeräte ermittelt werden in zusätzlicher Abhängigkeit von einer feldgerätindividuellen Information für die durchzuführende Funktion. Die Information für die durchzuführende Funktion erlaubt grundsätzlich, die durchführbaren Funktionen auf einem Feldgerät voneinander zu unterscheiden. Dadurch, dass die Informationen aber auch feldgeräteindividuell sind, sind die Informationen für die durchführbaren Funktionen auch für identische Funktionen auf verschiedenen Feldgeräten voneinander verschieden. Die feldgeräteindividuelle Information ist also tatsächlich eine feldgeräte- und funktionsindividuelle Information; dieses Verständnis liegt der Verwendung des Begriffs der feldgeräteindividuellen Information stets zugrunde.

Durch diese Maßnahme wird ein zusätzliches Maß an Manipulationssicherheit erlangt, weil der abgeleitete Zeitwert nun abhängig ist von dem synchronisierten Zeitwert und der ausgewählten Funktion des Feldgeräts, die gekennzeichnet ist durch die geräteindividuelle Information. Es ist dem Prozessleitsystem damit nicht möglich, einen Freigabecode so zu manipulieren, dass dieser in verschiedenen verbundenen Feldgeräten erfolgreich eine für nur ein bestimmtes Feldgerät erworbene Funktionalität (mit der entsprechenden geräteindividuellen Information) freischalten könnte. Darüberhinaus wird ein zusätzliches Maß an Manipulationssicherheit auch deshalb erlangt, weil der abgeleitete Zeitwert auch abhängig ist von dem synchronisierten Zeitwert des Feldgeräts. Es ist dem Prozessleitsystem nicht möglich, einen Freigabecode durch Austausch einer reinen (abgeleiteten) Zeitinformation so zu manipulieren, dass dieser in dem verbundenen Feldgerät erfolgreich mehrfach, also zu den Zeitpunkten mit entsprechend manipulierten (abgeleiteten) Zeitwerten, die lediglich einmal erworbene Funktionalität des Feldgerätes freischalten könnte.

Zur Umsetzung dieser zusätzlichen Manipulationssicherheit ist vorzugsweise vorgesehen, dass die Auswahlliste durchführbarer Funktionen des Feldgerätes mit der Kennung SN die feldgerätindividuellen Informationen für die durchführbaren Funktionen umfasst. Alternativ können die feldgerätindividuellen Informationen für die durchführbaren Funktionen aus der jeweiligen Beschreibung der durchführbaren Funktion und der Feldgerätekennung des Feldgerätes bestimmt werden.

Der zu der in dem Feldgerät hinterlegten Beschreibung der durchzuführenden Funktion korrespondierende ausführbare Code kann auf verschiedene Weise ermittelt werden. Gemäß einer Weiterentwicklung des Verfahrens ist vorgesehen, dass der ausführbare Code der durchzuführenden Funktion selbst als Beschreibung der durchzuführenden Funktion in dem Feldgerät hinterlegt ist. Gemäß einer alternativen Weiterentwicklung des Verfahrens ist vorgesehen, dass der ausführbare Code der durchzuführenden Funktion aus der Beschreibung der durchzuführenden Funktion im Feldgerät erzeugt wird. Dazu umfasst die Beschreibung wenigstens eine der folgenden Angaben: Art der Funktion, Zeitdauer der Durchführbarkeit der Funktion, Häufigkeit der Durchführbarkeit der Funktion, Durchführfrequenz der Funktion, Auflösung des Ausgabewertes der Funktion.

Gemäß der der zweiten Variante entsprechenden Ausgestaltung des Verfahrens - das Feldgerät muss nicht über eine Auswahlliste der durchführbaren Funktionalitäten verfügen - ist vorgesehen, dass im Aufforderungsschritt die Serviceeinheit aus der Angabe der durchzuführenden Funktion den der durchzuführenden Funktion entsprechenden ausführbaren Code ermittelt. Bei dem ausführbaren Code kann es sich um mindestens einen entsprechend parametrierten Funktionsaufruf handeln, wobei die mindestens eine Funktion selbst schon in dem Feldgerät implementiert ist. Es ist aber auch denkbar, dass sogar die programmiertechnische Umsetzung der ausgewählten Funktionalität als ausführbare Code übertragen wird; es kann sich hier um eine hochsprachliche Umsetzung der ausgewählten Funktionalität handeln, die in dem empfangenen Feldgerät noch entsprechend zu übersetzen bzw. zu interpretieren ist, es könnte sich aber auch um einen unmittelbar ausführbaren Binärcode handeln. Da die ausgewählte Funktionalität als ausführbarer Code zu dem Feldgerät übertragen wird, benötigt das Feldgerät keine Kenntnis über alle grundsätzlich auswählbaren Funktionalitäten, weshalb auf dem Feldgerät - wie oben bereits angedeutet - eine Auswahlliste nicht hinterlegt werden muss. Dies ist mit einem geringeren Speicherbedarf verbunden; je nach Größe der Auswahlliste kann der Speicherbedarf auch ganz erheblich geringer sein bei dieser Variante des vorgestellten Verfahrens.

Die Serviceeinheit ermittelt einen Hashwert aus dem ausführbaren Code. Dann ermittelt die Serviceeinheit den Freigabecode aus dem ausführbaren Code und dem Hashwert aus dem ausführbaren Code, wobei zumindest der Hashwert oder der ausführbare Code von der Serviceeinheit mit dem aktuellen abgeleiteten Zeitwert der Serviceeinheit als symmetrischem Schlüssel verschlüsselt wird.

Eine bevorzugte Weiterentwicklung dieser Verfahrensvariante, die eine erhöhte Manipulationssicherheit aufweist, sieht vor, dass der aktuelle abgeleitete Zeitwert auf der Serviceeinheit und der aktuelle abgeleitete Zeitwert auf dem Feldgeräte ermittelt werden in zusätzlicher Abhängigkeit von der Feldgerätekennung des Feldgerätes. Dadurch ist es dem Prozessleitsystem beispielsweise nicht mehr möglich, einen einmal erworbenen Freigabecode so zu manipulieren, dass er auch für andere Feldgeräte verwendbar ist.

Gemäß einer Ausgestaltung ist vorgesehen, dass der Freigabecode auf der Serviceeinheit zusammengestellt wird aus dem ausführbaren Code und aus dem mit dem aktuellen abgeleiteten Zeitwert der Serviceeinheit als symmetrischem Schlüssel verschlüsselten Hashwert. Auch hier ist die Möglichkeit gegeben, dass das Prozessleitsystem den an das Feldgerät zu übertragenden Freigabecode vorher auf die enthaltene Funktionalität hin überprüft, sodass das Prozessleitsystem auch in diesem Fall die volle Kontrolle darüber hat, wie das betreffende Feldgerät bei Übertragung des Freigabecodes beeinflusst wird. Der Anlagenbetreiber muss also nicht darauf vertrauen, dass der erhaltene Freigabecode der zuvor ausgewählten Funktionalität entspricht, er kann die Korrespondenz vielmehr selbst überprüfen.

In dem Prüfschritt entschlüsselt das Feldgerät den verschlüsselten Teil des empfangenen Freigabecodes mit dem aktuellen abgeleiteten Zeitwert des Feldgerätes als korrespondierendem symmetrischen Schlüssel. Das Feldgerät vergleicht dann den aus der Entschlüsselung gewonnenen und auf der Serviceeinheit ermittelten Hashwert vergleicht mit einem von dem Feldgerät ermittelten Hashwert aus dem mit dem Freigabecode empfangenen ausführbaren Code. Bei Übereinstimmung der Hashwerte verifiziert das Feldgerät den übermittelten Freigabecode als von der Serviceeinheit erzeugt. Schließlich führt das Feldgerät in dem Ausführungsschritt den empfangenen ausführbaren Code aus.

Eine alternative Ausgestaltung der zweiten Variante des Verfahrens zeichnet sich dadurch aus, dass der Freigabecode auf der Serviceeinheit zusammengestellt wird aus dem mit dem aktuellen abgeleiteten Zeitwert der Serviceeinheit als symmetrischem Schlüssel verschlüsselten Wertepaar aus dem ausführbaren Code und dem Hashwert aus dem ausführbaren Code.

In dem Prüfschritt entschlüsselt das Feldgerät den empfangenen Freigabecode mit dem aktuellen abgeleiteten Zeitwert des Feldgerätes als korrespondierendem symmetrischen Schlüssel. Das Feldgerät vergleicht dann den aus der Entschlüsselung gewonnenen und auf der Serviceeinheit ermittelten Hashwert mit einem von dem Feldgerät ermittelten Hashwert aus dem mit dem Freigabecode empfangenen ausführbaren Code. Bei Übereinstimmung der Hashwerte gilt als verifiziert, dass der übermittelte Freigabecode von der Serviceeinheit erzeugt worden ist und das Feldgerät führt in dem Ausführungsschritt den empfangenen ausführbaren Code aus.

Bei einer weiteren vorteilhaften Ausgestaltung des Verfahrens, die auf alle beschriebenen Varianten anwendbar ist, werden der von der Serviceeinheit von dem aktuellen Zeitwert der Serviceeinheit abhängige abgeleitete Zeitwert und der von dem Feldgerät von dem aktuellen Zeitwert des Feldgeräts abhängige abgeleitete Zeitwert berechnet mittels einer kryptografischen Hashfunktion unter Verwendung eines zwischen dem Feldgerät und der Serviceeinheit vereinbarten geheimen Schlüssels.

Eine vorteilhafte Weiterbildung des Verfahrens, die ebenfalls auf alle Verfahrensvarianten anwendbar ist, zeichnet sich dadurch aus, dass für den Fall, dass in dem Prüfschritt von dem Feldgerät unter Verwendung des aktuellen abgeleiteten Zeitwerts des Feldgerätes eine Erzeugung des übermittelten Freigabecodes durch die Serviceeinheit nicht verifiziert werden kann, das Feldgerät wenigstens einen vorangehenden Zeitwert und den vorangehenden daraus abgeleiteten Zeitwert zur Überprüfung verwendet und/oder das Feldgerät wenigstens einen zukünftigen Zeitwert und den daraus abgeleiteten zukünftigen Zeitwert zur Überprüfung der Erzeugung des übermittelten Freigabecodes durch die Serviceeinheit verwendet. Bei erfolgreicher Verifikation der Erzeugung des übermittelten Freigabecodes durch die Serviceeinheit mit einem vergangenen oder einem abgeleiteten zukünftigen Zeitwert wird die Verifikation als gültig bewertet.

In dem vorgenannten Zusammenhang hat es sich als nützlich herausgestellt, wenn die zeitliche Abweichung zwischen dem aktuellen abgeleiteten Zeitwert und dem zur erfolgreichen Verifikation führenden vergangenen oder zukünftigen abgeleiteten Zeitwert herangezogen wird zur Korrektur der Zeitzählvorrichtung des Feldgerätes zwecks Synchronisation mit der Zeitzählvorrichtung der Serviceeinheit.

Eine weitere Weiterentwicklung des Verfahrens ermöglicht die Auslösung einer Funktion des Feldgerätes zu einem zukünftigen Zeitpunkt. Dazu teilt das Prozessleitsystem der Serviceeinheit im Auswahlschritt neben der ausgewählte Funktion auch einen zukünftigen Gültigkeitszeitpunkt mit. Die Serviceeinheit berechnet aus dem aktuellen Zeitwert ihrer Zeitzählvorrichtung und der Zeitdifferenz zu dem zukünftigen Gültigkeitszeitpunkt einen zukünftigen aktuellen Zeitwert. Dieser zukünftige aktuellen Zeitwert wird von der Serviceeinheit für die Ermittlung des Freigabecodes als aktuellem Zeitwert verwendet. In dem Feldgerät wird der Freigabecode erst als von der Serviceeinheit erzeugt verifiziert, wenn der aktuelle Zeitwert der Zeitzählvorrichtung des Feldgerätes dem vorgenannten zukünftigen Gültigkeitszeitpunkt entspricht.

Bei einer Ausgestaltung des Verfahrens ist hinsichtlich des Zahldienstes vorgesehen, dass der Zahldienst auf dem Prozessleitsystem und/oder auf der Serviceeinheit und/oder als separate Instanz, die mit dem Prozessleitsystem und/oder mit der Serviceeinheit kommuniziert, implementiert ist. Der Bezahldienst muss nicht von einem kaufmännischen Unternehmen angeboten werden, das berechtigt ist, Bankdienstleistungen zu erbringen. Bei dem Zahldienst kann es sich vielmehr um eine Funktionalität handeln, die erfasst, welche Funktionalitäten eines Feldgerätes von wem zur Durchführung angefordert worden sind. Dies kann beispielsweise in einem dem jeweiligen Verwender zugeordneten Kundenkonten vermerkt und dann später gemäß einer vereinbarten Zahlungsmodalität in Rechnung gestellt werden. Das alleinige Vermerken der Eintragung des Zahlungsbetrages in das entsprechende Kundenkonto kann dann als erfolgte Zahlung gelten und die Übermittlung der Bestätigungsinformation auslösen. Der Zahldienst kann demzufolge beispielsweise im Rahmen des Prozessleitsystems betrieben werden. Ein Teil des Zahldienstes kann auch auf der Serviceeinheit betrieben werden, sodass die Serviceeinheit den erforderlichen Zahlungsbetrag von einem Konto abgebucht, das auf dem Prozessleitsystem des Verwenders des Feldgerätes geführt wird.

Die hergeleitete Aufgabe wird bei dem eingangs genannten Feldgerät mit einer Recheneinheit zur Ausführung einer durchzuführenden Funktion des Feldgeräts und mit einer Kommunikationsschnittstelle zum Datenaustausch mit einem Prozessleitsystem dadurch gelöst, dass das Feldgerät wenigstens eine Zeitzählvorrichtung aufweist, die einen Zeitwert des Feldgeräts bereitstellt und dass die Recheneinheit so programmiert ist, dass das Feldgerät die das Feldgerät betreffenden Schritte des zuvor geschilderten Verfahrens ausführen kann und im Betrieb des Feldgeräts auch ausführt, insbesondere den Prüfschritt und den Ausführungsschritt. Bei einer Ausgestaltung des Feldgerätes ist vorgesehen, dass die Zeitzählvorrichtung des Feldgeräts manipulationssicher ausgestaltet ist, wodurch verhindert wird, dass eine zu einem bestimmten Zeitpunkt freigeschaltete Funktion des Feldgerätes durch Rücksetzen der Zeitzählvorrichtung des Feldgerätes mehrmals aktiviert wird. Dazu kann beispielsweise vorgesehen sein, dass die Beeinflussung der Zeitzählvorrichtung des Feldgerätes nicht vorgesehen ist oder aber als unzulässig verworfen wird, wenn nicht zusätzliche Randbedingungen erfüllt sind, dass aufeinanderfolgende Beeinflussungen der Zeitzählvorrichtung des Feldgerätes nur nach einer vorbestimmten Zeitdauer möglich sind (zum Beispiel nach einer Stunde oder nach einem Tag) oder nur eine bestimmte Anzahl von Beeinflussungen der Zeitzählvorrichtung innerhalb eines bestimmten Zeitintervalls möglich sind (zum Beispiel drei Beeinflussungen pro Jahr).

Ferner wird die hergeleitete Aufgabe bei der eingangs genannten Serviceeinheit mit einer Recheneinheit und mit einer Zeitzählvorrichtung dadurch gelöst, dass die Zeitzählvorrichtung einen Zeitwert der Serviceeinheit bereitstellt und dass die Recheneinheit so programmiert ist, dass die Serviceeinheit die die Serviceeinheit betreffenden Schritte des zuvor geschilderten Verfahrens ausführen kann und im Betrieb der Serviceeinheit auch ausführt, insbesondere den Aufforderungsschritt.

Im Einzelnen gibt es nun eine Vielzahl von Möglichkeiten, das erfindungsgemäße Verfahren, das erfindungsgemäße Feldgerät und das erfindungsgemäße System auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen

Fig. 1     schematisch den gerätetechnischen Aufbau zur Durchführung des Verfahrens zur bezahlbasierten Ausführung einer durchzuführenden Funktion eines Feldgerätes,

Fig. 2     schematisch die Interaktion zwischen dem Feldgerät, dem Prozessleitsystem, der Serviceeinheit und dem Zahlungsdienst nach Art eines Sequenzdiagramms in einem allgemeinen Ausführungsbeispiel,

Fig. 3      das Ausführungsbeispiel gemäß Figur 2 mit einer Ergänzung hinsichtlich der Kommunikation zwischen dem Prozessleitsystem und der Serviceeinheit

Fig. 4      schematisch die Interaktion zwischen dem Feldgerät, dem Prozessleitsystem, der Serviceeinheit und dem Zahlungsdienst nach Art eines Sequenzdiagramms in einem Ausführungsbeispiel unter Verwendung einer Auswahlliste auf dem Feldgerät,

Fig. 5      schematisch die Interaktion zwischen dem Feldgerät, dem Prozessleitsystem, der Serviceeinheit und dem Zahlungsdienst nach Art eines Sequenzdiagramms in einem Ausführungsbeispiel unter Verwendung eines übertragenen ausführbaren Codes gemäß einer ersten Variante und

Fig. 6      schematisch die Interaktion zwischen dem Feldgerät, dem Prozessleitsystem, der Serviceeinheit und dem Zahlungsdienst nach Art eines Sequenzdiagramms in einem Ausführungsbeispiel unter Verwendung eines übertragenen ausführbaren Codes gemäß einer zweiten Variante.

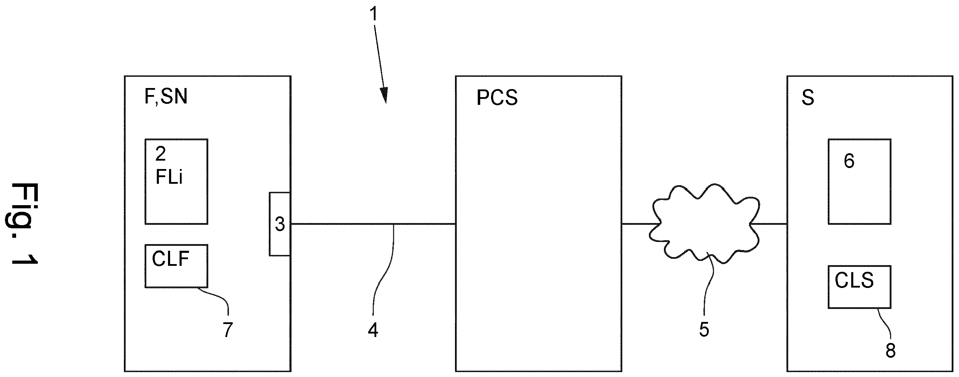

In den Fig. 1 bis 6 ist jeweils dargestellt ein Verfahren 1 zur bezahlbasierten Ausführung einer durchzuführenden Funktion FLi eines Feldgerätes F, wobei das Feldgerät F eine Kennung SN aufweist. Das Feldgerät F ist mit einem Prozessleitsystem PCS über einen ersten Kommunikationskanal 4 verbunden. Figur 1 zeigt die grundsätzliche gerätetechnische Anordnung, die erforderlich ist, um das vorgenannte Verfahren 1 durchführen zu können. Das Feldgerät F hat hier eine Kennung SN in Form einer Seriennummer, die das Gerät eindeutig kennzeichnet. Das Feldgerät F weist eine Recheneinheit 2 zur Ausführung einer durchzuführenden Funktion FLi des Feldgerätes F auf. Das Feldgerät F weist ferner eine Kommunikationsschnittstelle 3 auf, bei der es sich hier um eine Feldbusschnittstelle handelt, vorliegend gemäß dem HART-Protokoll. Das Feldgerät F steht mit einem hier nicht dargestellten technischen Prozess in Wechselwirkung. Mittels der Kommunikationsschnittstelle 3 steht das Feldgerät F mit dem Prozessleitsystem PCS über den ersten Kommunikationskanal 4 in Verbindung. In üblichen Anwendungen ist eine Vielzahl von Feldgeräten F mit dem Prozessleitsystem PCS über ein Feldbussystem verbunden.

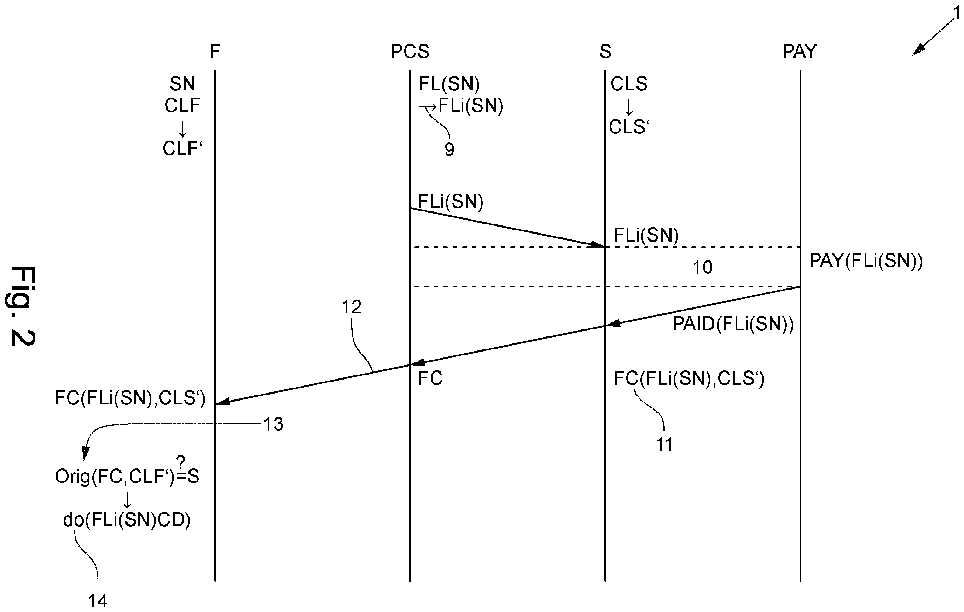

Das nachfolgend insbesondere anhand der Fig. 2 bis 6 dargestellte Verfahren zur bezahlbasierten Ausführung einer durchzuführenden Funktion FLi des Feldgerätes F ermöglicht die bedarfsweise und zeitweise Ausführung einer Funktion FLi des Feldgerätes F, ohne dass ein zusätzliches Gerät direkt mit dem Feldgerät F in Kontakt treten muss, was Stand der Technik erforderlich ist, beispielsweise um einen Freischaltcode für die betreffende Funktion FLi des Feldgerätes F in das Feldgerät F zu übertragen.

Dazu ist das Prozessleitsystem PCS über einen zweiten Kommunikationskanal 5 mit einer Serviceeinheit S verbunden. Bei der Serviceeinheit S handelt es sich vorliegend um ein Datenbanksystem des Anbieters des Feldgerätes F. Auch die Serviceeinheit S weist eine Recheneinheit 6 auf, die entsprechend programmiert ist, um die nachfolgend beschriebene Funktionalität auf zu realisieren. Der zweite Kommunikationskanal 5 ist internetbasiert realisiert. Das Feldgerät F und die Serviceeinheit S weisen jeweils eine Zeitzählvorrichtung 7, 8 auf, wobei die Zeitzählvorrichtungen 7, 8 miteinander synchronisiert sind und jeweils einen Zeitwert CLF des Feldgeräts F und einen Zeitwert CLS der Serviceeinheit S bereitstellen.

Das grundlegende Prinzip aller in den Figuren 2 bis 6 dargestellten Verfahren 1 wird nunmehr anhand von Fig. 2 erläutert. Die verschiedenen Kommunikationspartner, nämlich das Feldgerät F, das Prozessleitsystem PCS, die Serviceeinheit S und ein noch näher zu erläuternder Zahlungsdienst PAY sind hier nach Art eines Sequenzdiagramms als vertikale Linien dargestellt. Die Pfeile zwischen den vertikalen Linien geben an, welche Informationen zwischen den Kommunikationspartnern ausgetauscht werden.

In einem Auswahlschritt 9 wählt das Prozessleitsystem PCS die auf dem Feldgerät F durchzuführende Funktion FLi(SN) aus einer dem Prozessleitsystem PCS zur Verfügung stehenden Auswahlliste durchführbarer Funktionen FL(SN) des Feldgerätes F aus. Das Prozessleitsystem PCS teilt dann die ausgewählte Funktion FLi(SN) der Serviceeinheit S mit. Die Auswahl der durchzuführenden Funktion FL(SN) geschieht gemäß den Bedürfnissen des Betreibers der Anlage, zu der das Feldgerät F zählt. Aus diesem Grund ist es sinnvoll, dass der Auswahlschritt 9 maßgeblich im Prozessleitsystem PCS lokalisiert ist.

In einem Zahlungsschritt 10 wird ein für die durchzuführende Funktion FLi(SN) vorgegebener Zahlungsbetrag durch einen Zahlungsdienst PAY entrichtet und die Zahlung des Zahlungsbetrags wird von dem Zahlungsdienst PAY an die Serviceeinheit S durch Übermittlung einer Bestätigungsinformation PAID(FLi(SN)) bestätigt. In den Fig. 2 bis 6 ist der Zahlungsschritt 10 durch zwei gestrichelte horizontale Linien angedeutet, wobei der Zahlungsdienst PAY der Übersichtlichkeit halber durch eine separate vertikale Linie dargestellt ist. Dadurch soll angedeutet werden, dass die Funktionalität des Zahlungsdienstes PAY auch in dem Prozessleitsystem PCS und oder der Serviceeinheit S verortet sein kann.

In einem Aufforderungsschritt 11 ermittelt die Serviceeinheit S einen von dem aktuellen Zeitwert CLS der Serviceeinheit S abhängigen abgeleiteten Zeitwert CLS' der Serviceeinheit S und von der durchzuführenden Funktion FLi(SN) abhängigen Freigabecode FC. Die Serviceeinheit S übermittelt den Freigabecode FC an das Prozessleitsystem PCS.

In einem Weiterleitungsschritt 12 leitet das Prozessleitsystem PCS den Freigabecode FC dann an das Feldgerät F weiter.

In einem Prüfschritt 13 ermittelt das Feldgerät F einen von dem aktuellen Zeitwert CLF des Feldgeräts F abhängigen abgeleiteten Zeitwert CLF' des Feldgeräts F und das Feldgerät F überprüft den Freigabecode FC unter Verwendung des abgeleiteten Zeitwerts CLF' des Feldgeräts F daraufhin, ob der Freigabecode FC von der Serviceeinheit S erzeugt ist (das ist in Fig. 2 durch den Pseudocode "Orig(FC, CLF')?=S" angedeutet). Ferner ermittelt das Feldgerät F aus dem Freigabecode FC die durchzuführende Funktion FLi(SN).

In einem Ausführungsschritt 14 führt das Feldgerät F in dem Fall, dass der von dem Feldgerät F empfangene Freigabecode FC als von der Serviceeinheit S erzeugt verifiziert ist, einen der durchzuführenden Funktion FLi(SN) entsprechenden ausführbaren Code FLi(SN)CD aus (das ist in Fig. 2 durch den Pseudocode "do(FLi(SN)CD)" angedeutet).

Der Vorteil des hier anhand von Fig. 2 beschriebenen Verfahrens besteht darin, dass die Abwicklung der Bezahlung und die Erzeugung eines Freigabecodes FC sowie die Übertragung des Freigabecodes FC in das Feldgerät F vollständig realisiert ist, ohne dass ein Kontakt zu dem Feldgerät über einen zusätzlichen Kommunikationskanal erfolgt. Aufgrund der Erzeugung des Freigabecodes FC unter Verwendung einer (abgeleiteten) Zeitinformation funktioniert der Freigabecode durch seinen Zeitbezug nur zeitbegrenzt. Eine erneute Versendung des Freigabecodes von dem Prozessleitsystem an das Feldgerät liefe also ins Leere.

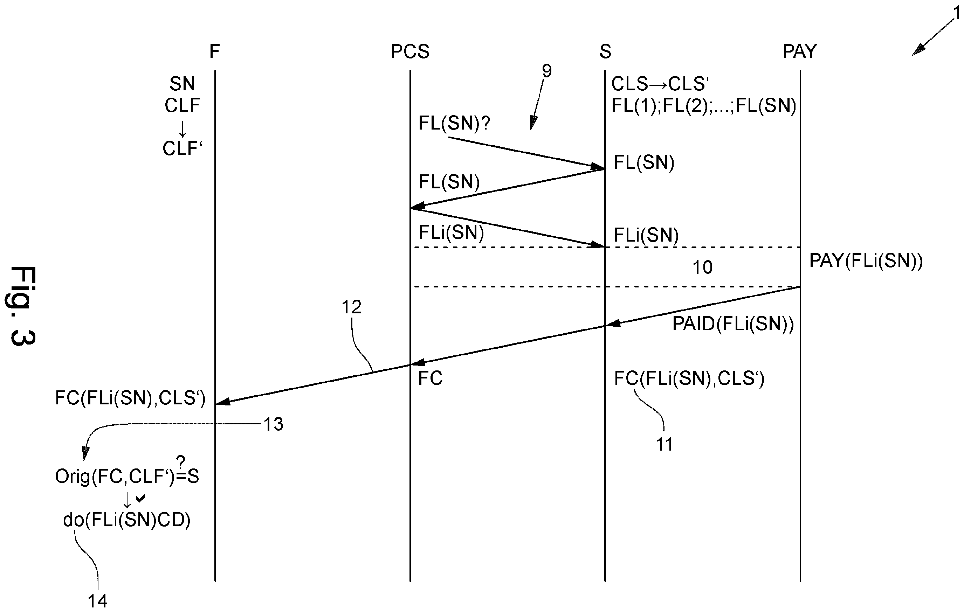

Das Verfahren gemäß Fig. 3 entspricht im Wesentlichen dem Verfahren, das in Fig. 2 dargestellt ist, es wird hier jedoch zusätzlich erläutert, wie das Prozessleitsystem PCS in Kenntnis der Auswahlliste FLi(SN) des Feldgerätes F mit der Kennung SN gelangt. In der Serviceeinheit S sind mehrere Auswahllisten durchführbarer Funktionen FL(SN) mehrerer Feldgeräte F hinterlegt, idealerweise sind in der Serviceeinheit S alle Auswahllisten aller Feldgeräte des Anbieters der Feldgeräte hinterlegt. Im Auswahlschritt 9 fordert das Prozessleitsystem PCS von der Serviceeinheit S die Auswahlliste durchführbarer Funktionen FL(SN) des Feldgeräts F mit der Kennung SN an. Die Serviceeinheit S stellt dem Prozessleitsystem PCS die angeforderte Auswahlliste durchführbarer Funktionen FL(SN) des Feldgeräts F mit der Kennung SN daraufhin zur Verfügung. Im Prozessleitsystem PCS wird dann aus der Auswahlliste durchführbarer Funktionen FL(SN) die auf dem Feldgerät F durchzuführende Funktion FLi(SN) ausgewählt. im vorliegenden Fall umfasst die Auswahlliste durchführbarer Funktionen FL(SN) auch entsprechende Preisinformationen für die Durchführung der in der Auswahlliste aufgelisteten Funktionen des Feldgerätes F.

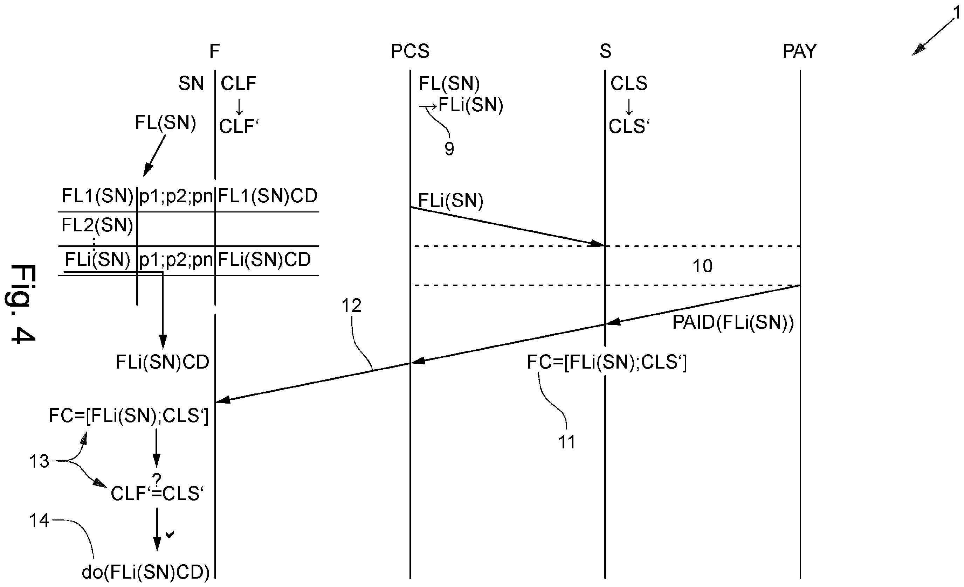

Fig. 4 zeigt eine Ausgestaltung des Verfahrens 1, bei der vorausgesetzt wird, dass das Feldgerät F selbst über eine vollständige Liste der auf ihm durchführbaren Funktionen FL(SN) verfügt. In dem Feldgerät F ist demnach die Auswahlliste durchführbarer Funktionen FL(SN) des Feldgerätes F mit der Kennung SN hinterlegt und zwar zusammen mit einer entsprechenden Beschreibung p1, p2,..., pn jeder einzelnen durchführbaren Funktion FLi(SN). Wie schon im allgemeinen Ausführungsbeispiel erläutert, ist in der Serviceeinheit S ebenfalls die Auswahlliste durchführbarer Funktionen FL(SN) des Feldgerätes F hinterlegt.

Im Aufforderungsschritt 11 stellt die Serviceeinheit S den Freigabecode FC=[FLi(SN); CLS'] zusammen aus dem aktuellen abgeleiteten Zeitwert CLS' der Serviceeinheit S und einer Angabe zur ausgewählten Funktionen FLi(SN) des Feldgerätes F. In dem Prüfschritt 13 ermittelt das Feldgerät F aus dem übermittelten Freigabecode FC einen übermittelten abgeleiteten Zeitwert CLS' der Serviceeinheit S und den aktuellen abgeleiteten Zeitwert CLF' des Feldgerätes F. Bei Übereinstimmung des übermittelten abgeleiteten Zeitwertes CLS' der Serviceeinheit S mit dem aktuellen abgeleiteten Zeitwert CLF' des Feldgerätes F gilt der übermittelte Freigabecode FC verifiziert als von der Serviceeinheit S erzeugt.

In dem Ausführungsschritt 14 führt das Feldgerät F entsprechend der in dem Feldgerät F hinterlegten Beschreibung zu der übermittelten durchzuführenden Funktion FLi(SN) den korrespondierenden ausführbaren Code FLi(SN)CD der durchzuführenden Funktion FLi(SN) aus.

Die in dem Feldgerät F abgelegte Liste der auf dem Feldgerät F durchführbaren Funktionen FL(SN) deutet zwei verschiedene Möglichkeiten an, wie die Beschreibungen der entsprechenden Funktionen realisiert werden können. Eine Variante zeichnet sich dadurch aus, dass der ausführbare Code FL1(SN)CD, FLi(SN)CD der durchzuführenden Funktion FL1(SN), FLi(SN) selbst als Beschreibung der durchzuführenden Funktion FLi(SN) in dem Feldgerät F hinterlegt ist. Bei der anderen Variante wird der ausführbare Code FLi(SN)CD der durchzuführenden Funktion FLi(SN) aus der Beschreibung p1, p2, p3 der durchzuführenden Funktion FLi(SN) im Feldgerät F erzeugt. In diesem Fall umfasst die Beschreibung p1, p2, p3 wenigstens eine der folgenden Angaben: Art der Funktion, Zeitdauer der Durchführbarkeit der Funktion, Häufigkeit der Durchführbarkeit der Funktion, Durchführfrequenz der Funktion, Auflösung des Ausgabewertes der Funktion. Als vorteilhaft ist bei dieser Variante des Verfahrens 1 anzusehen, dass der Freigabecode die ausgewählte und durchzuführende Funktion FLi unverschlüsselt überträgt, sodass das Prozessleitsystem PCS eine Überprüfungsmöglichkeit hat, ob die zu dem Feldgerät übertragene ausgewählte durchzuführende Funktion FLi(SN) mit der tatsächlich zuvor ausgewählten Funktion übereinstimmt.

Die Ausgestaltung des Verfahrens 1 nach Fig. 4 zeichnet sich ferner dadurch aus, dass der aktuelle abgeleitete Zeitwert CLS' auf der Serviceeinheit S und der aktuelle abgeleitete Zeitwert CLF' auf dem Feldgeräte F ermittelt werden in zusätzlicher Abhängigkeit von einer feldgerätindividuellen Information für die durchzuführende Funktion FLi(SN). Im vorliegenden Fall umfasst die Auswahlliste durchführbarer Funktionen FL(SN) des Feldgerätes F mit der Kennung SN die feldgerätindividuellen Informationen für die durchführbaren Funktionen FL(SN), was im Einzelnen nicht dargestellt aber ohne Weiteres verständlich ist. Insgesamt wird dadurch ein erhöhtes Maß an Manipulationssicherheit erreicht

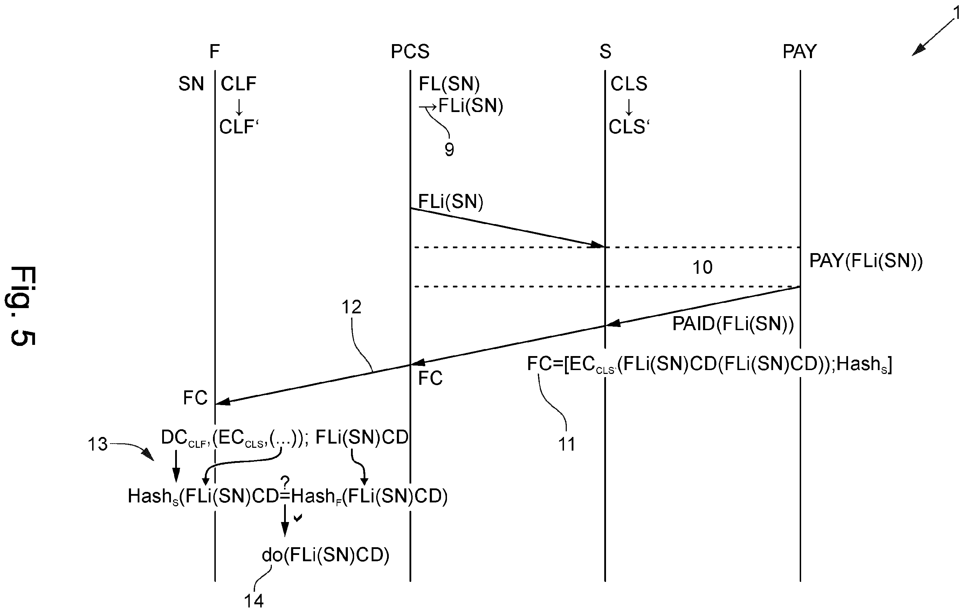

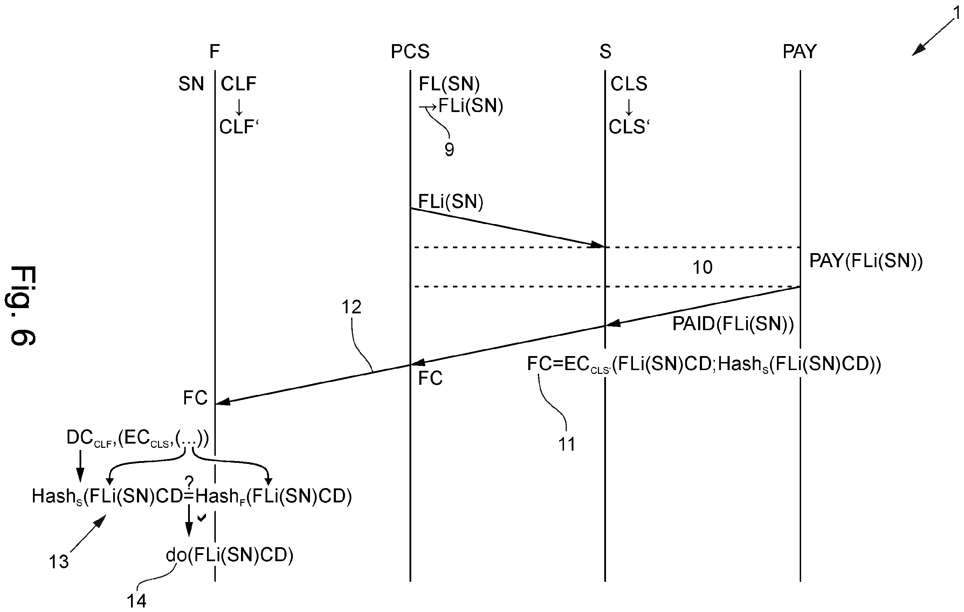

Die in den Fig. 5 und 6 dargestellten Verfahren 1 benötigen keine in dem Feldgerät F abgelegte Auswahlliste durchführbar Funktionen FL(SN). Dazu ermittelt im Aufforderungsschritt 11 die Serviceeinheit (S) aus der Angabe der durchzuführenden Funktion FLi(SN) den der durchzuführenden Funktion FLi(SN) entsprechenden ausführbaren Code FLi(SN)CD. Die Serviceeinheit S ermittelt ferner einen Hashwert $Hash_S$(FLi(SN)CD) aus dem ausführbaren Code (FLi(SN)CD). Schließlich ermittelt die Serviceeinheit S den Freigabecode FC aus dem ausführbaren Code FLi(SN)CD und dem Hashwert $Hash_S$(FLi(SN)CD) aus dem ausführbaren Code FLi(SN)CD, wobei zumindest der Hashwert $Hash_S$(FLi(SN)CD) von der Serviceeinheit S mit dem aktuellen abgeleiteten Zeitwert CLS' der Serviceeinheit S als symmetrischem Schlüssel verschlüsselt wird.

Zusätzlich ist bei den dargestellten Verfahren realisiert, dass der aktuelle abgeleitete Zeitwert CLS' auf der Serviceeinheit S und der aktuelle abgeleitete Zeitwert CLF' auf dem Feldgerät F ermittelt werden in zusätzlicher Abhängigkeit von einer eindeutigen Kennung des Feldgerätes F, wobei hier als eindeutige Kennung des Feldgerätes F die Feldgerätekennung SN des Feldgerätes F verwendet wird.

Es wäre auch denkbar, an Stelle des abgeleiteten Zeitwertes CLS' der Serviceeinheit S die eindeutige Kennung des Feldgerätes F als symmetrischen Schlüssel zu verwenden, denn diese liegt sowohl in der Serviceeinheit S als auch im Feldgerät F vor. Allerdings wäre das Verfahren dann anfällig gegen Replay-Attacken durch den das Prozessleitsystem PCS.

Das in Fig. 5 darstellte Ausführungsbeispiel des Verfahrens 1 zeichnet sich dadurch aus, dass der Freigabecode FC auf der Serviceeinheit S zusammengestellt wird aus dem ausführbaren Code FLi(SN)CD und aus dem mit dem aktuellen abgeleiteten Zeitwert CLS' der Serviceeinheit S als symmetrischem Schlüssel verschlüsselten Hashwert $Hash_S$(FLi(SN)CD)), sodass als Freigabecode resultiert
FC = [FLi(SN)CD; $EC_{CLS'}$($Hash_S$(FLi(SN)CD))].

Auch diese Variante des Verfahrens 1 weist den Vorteil auf, dass der Freigabecode unverschlüsselt einen Hinweis auf die durchzuführende Funktion FLi(SN) enthält, hier nämlich in Form des korrespondierenden ausführbaren Codes. Das Prozessleitsystem hat jedenfalls auch in diesem Fall die Möglichkeit, den zum Feldgerät F übermittelten Freigabecode FC daraufhin zu überprüfen, ob er die tatsächlich ausgewählte Funktion FLi(SN) enthält.

In dem Prüfschritt 13 entschlüsselt das Feldgerät F den verschlüsselten Teil $EC_{CLS'}$($Hash_S$(FLi(SN)CD)) des empfangenen Freigabecodes FC mit dem aktuellen abgeleiteten Zeitwert CLF' des Feldgerätes F als korrespondierendem symmetrischen Schlüssel $DC_{CLF'}$($EC_{CLS'}$). Das Feldgerät F vergleicht dann den aus der Entschlüsselung gewonnenen und auf der Serviceeinheit S ermittelten Hashwert $Hash_S$(FLi(SN)CD) mit einem von dem Feldgerät F ermittelten Hashwert $Hash_F$(FLi(SN)CD) aus dem mit dem Freigabecode FC empfangenen ausführbaren Code FLi(SN)CD. Bei Übereinstimmung der Hashwerte $Hash_S$, $Hash_F$ verifiziert das Feldgerät F den übermittelten Freigabecode FC als von der Serviceeinheit S erzeugt. Das Feldgerät F führt in diesem Fall in dem Ausführungsschritt 14 den empfangenen ausführbaren Code FLi(SN)CD aus (do(FLi(SN)CD)).

Die in Fig. 6 dargestellte Variante des Verfahrens 1 zeichnet sich dadurch aus, dass der Freigabecode FC auf der Serviceeinheit S zusammengestellt wird aus dem mit dem aktuellen abgeleiteten Zeitwert CLS' der Serviceeinheit S als symmetrischem Schlüssel verschlüsselten Wertepaar [$Hash_S$(FLi(SN)CD); FLi(SN)CD] aus dem ausführbaren Code FLi(SN)CD und dem Hashwert $Hash_S$(FLi(SN)CD) aus dem ausführbaren Code FLi(SN)CD, sodass als Freischaltcode resultiert:

$$FC = EC_{CLS'}[FLi(SN)CD; Hash_S(FLi(SN)CD)].$$

In dem Prüfschritt 13 entschlüsselt das Feldgerät F den empfangenen Freigabecode FC mit dem aktuellen abgeleiteten Zeitwert CLF' des Feldgerätes F als korrespondierendem symmetrischen Schlüssel $DC_{CLF'}$(FC). Das Feldgerät F vergleicht den aus der Entschlüsselung gewonnenen und auf der Serviceeinheit S ermittelten Hashwert $Hash_S$(FLi(SN)CD) mit einem von dem Feldgerät F ermittelten Hashwert $Hash_F$(FLi(SN)CD) aus dem mit dem Freigabecode (FC) empfangenen ausführbaren Code FLi(SN)CD. Bei Übereinstimmung der Hashwerte $Hash_S$, $Hash_F$ verifiziert das Feldgerät F den übermittelten Freigabecode FC als von der Serviceeinheit S erzeugt. In diesem Fall wiederum führt das Feldgerät F in dem Ausführungsschritt 14 den empfangenen ausführbaren Code FLi(SN)CD aus.

In den in den Fig. 2 bis 6 dargestellten Ausführungsbeispielen des Verfahrens 1 ist realisiert, dass der von der Serviceeinheit S von dem aktuellen Zeitwert CLS der Serviceeinheit S abhängige abgeleitete Zeitwert CLS' und der von dem Feldgerät F von dem aktuellen Zeitwert CLF des Feldgeräts F abhängige abgeleitete Zeitwert CLF' berechnet werden mit einer kryptografischen Hash-Funktion unter Verwendung mindestens eines zwischen dem Feldgerät F und der Serviceeinheit S vereinbarten geheimen Schlüssels.

In den in den Fig. 2 bis 6 dargestellten Ausführungsbeispielen des Verfahrens 1 ist ebenfalls implementiert, dass für den Fall, dass in dem Prüfschritt 13 von dem Feldgerät F unter Verwendung des aktuellen abgeleiteten Zeitwerts CLF' des Feldgerätes F eine Erzeugung des übermittelten Freigabecodes FC durch die Serviceeinheit S nicht verifiziert werden kann, das Feldgerät wenigstens einen vorangehenden Zeitwert CLF und den vorangehenden daraus abgeleiteten Zeitwert CLF' zur Überprüfung verwendet und/oder das Feldgerät wenigstens einen zukünftigen Zeitwert CLF und den zukünftigen daraus abgeleiteten Zeitwert CLF' zur Überprüfung der Erzeugung des übermittelten Freigabecodes FC durch die Serviceeinheit S verwendet, und bei erfolgreicher Verifikation der Erzeugung des übermittelten Freigabecodes FC durch die Serviceeinheit S mit einem vergangenen oder zukünftigen abgeleiteten Zeitwert CLF', die Verifikation als gültig bewertet wird. durch diese Maßnahme kann mit dem Verfahren auch gearbeitet werden, wenn die Zeit Zählvorrichtungen 7,8 auf dem Feldgerät und auf der Serviceeinheit beispielsweise mit zunehmender Betriebszeit leicht auseinandergelaufen sind.

Diese Vorgehensweise bietet zudem den Vorteil, dass die zeitliche Abweichung zwischen dem aktuellen abgeleiteten Zeitwert CLF' und dem zur erfolgreichen Verifikation führenden vergangenen oder zukünftigen abgeleiteten Zeitwert CLF' herangezogen wird zur Korrektur der Zeitzählvorrichtung 7 des Feldgerätes F zwecks Synchronisation mit der Zeitzählvorrichtung 8 der Serviceeinheit S.

**Bezugszeichen**

| | |
|---|---|
| F | Feldgerät |
| SN | Kennung des Feldgerätes |
| PCS | Prozessleitsystem |
| S | Serviceeinheit |
| FL | Auswahlliste durchführbarer Funktionen |
| FL(SN) | Auswahlliste durchführbarer Funktionen des Feldgerätes mit Kennung SN |
| FLi(SN) | Funktion i der Auswahlliste durchführbarer Funktionen des Feldgerätes mit Kennung SN |
| FLi(SN)CD | durchführbarer Code zur Ausführung der Funktion FLi(SN) auf dem Feldgerät F mit Kennung SN |
| do(FLi(SN)CD) | Ausführung des durchführbaren Codes auf dem Feldgerät F |
| CLF | Zeitwert der Zeitzählvorrichtung des Feldgerätes |
| CLF' | von dem Zeitwert CLF abgeleiteter Zeitwert |
| CLS | Zeitwert der Zeitzählvorrichtung der Serviceeinheit |
| CLS' | von dem Zeitwert CLS abgeleiteter Zeitwert |

| | |
|---|---|
| PAY | Bezahldienst |
| PAID | Bestätigungsinformation über Bezahlung eines vorgegebenen Zahlungsbetrags für durchzuführende Funktion |
| FC | Freigabecode |

| | |
|---|---|
| $Hash_y(x)$ | Hashwert von x berechnet auf Gerät y |
| $EC_y(x)$ | Verschlüsselung von x mit Schlüssel y |
| $DC_y(x)$ | Entschlüsselung von x mit Schlüssel y |

| | |
|---|---|
| 1 | Verfahren |
| 2 | Recheneinheit des Feldgerätes |
| 3 | Kommunikationsschnittstelle des Feldgerätes |
| 4 | erster Kommunikationskanal |
| 5 | zweiter Kommunikationskanal |
| 6 | Recheneinheit der Serviceeinheit |
| 7 | Zählvorrichtung des Feldgerätes |
| 8 | Zählvorrichtung der Serviceeinheit |
| 9 | Auswahlschritt |
| 10 | Zahlungsschritt |
| 11 | Aufforderungsschritt |
| 12 | Weiterleitungsschritt |

13 Prüfschritt
14 Ausführungsschritt

## Patentansprüche

1. Verfahren (1) zur bezahlbasierten Ausführung einer durchzuführenden Funktion (FLi) eines Feldgerätes (F), wobei das Feldgerät (F) eine Kennung (SN) aufweist, wobei das Feldgerät (F) mit einem Prozessleitsystem (PCS) über einen ersten Kommunikationskanal (4) verbunden ist,
**dadurch gekennzeichnet,**
**dass** das Prozessleitsystem (PCS) über einen zweiten Kommunikationskanal (5) mit einer Serviceeinheit (S) verbunden ist und wobei das Feldgerät (F) und die Serviceeinheit (S) jeweils wenigstens eine Zeitzählvorrichtung (7, 8) aufweisen und wobei die Zeitzählvorrichtungen (7, 8) miteinander synchronisiert sind und jeweils einen Zeitwert (CLF) des Feldgeräts (F) und einen Zeitwert (CLS) der Serviceeinheit (S) bereitstellen,
**dass** in einem Auswahlschritt (9) das Prozessleitsystem (PCS) die auf dem Feldgerät (F) durchzuführende Funktion (FLi(SN)) aus einer dem Prozessleitsystem (PCS) zur Verfügung stehenden Auswahlliste durchführbarer Funktionen (FL(SN)) des Feldgerätes (F) auswählt und das Prozessleitsystem (PCS) die ausgewählte Funktion (FLi(SN)) der Serviceeinheit (S) mitteilt,
**dass** in einem Zahlungsschritt (10) ein für die durchzuführende Funktion (FLi(SN)) vorgegebener Zahlungsbetrag durch einen Zahlungsdienst (PAY) entrichtet wird und die Zahlung des Zahlungsbetrags von dem Zahlungsdienst (PAY) an die Serviceeinheit (S) durch Übermittlung einer Bestätigungsinformation (PAID) bestätigt wird,
**dass** in einem Aufforderungsschritt (11) die Serviceeinheit (S) einen von dem aktuellen Zeitwert (CLS) der Serviceeinheit (S) abhängigen abgeleiteten Zeitwert (CLS') der Serviceeinheit (S) und von der durchzuführenden Funktion (FLi(SN)) abhängigen Freigabecode (FC) ermittelt und den Freigabecode (FC) an das Prozessleitsystem (PCS) übermittelt,
**dass** in einem Weiterleitungsschritt (12) das Prozessleitsystem (PCS) den Freigabecode (FC) an das Feldgerät (F) weiterleitet,
**dass** in einem Prüfschritt (13) das Feldgerät (F) einen von dem aktuellen Zeitwert (CLF) des Feldgeräts (F) abhängigen abgeleiteten Zeitwert (CLF') des Feldgeräts (F) ermittelt und den Freigabecode (FC) unter Verwendung des abgeleiteten Zeitwerts (CLF') des Feldgeräts (F) daraufhin überprüft, ob der Freigabecode (FC) von der Serviceeinheit (S) erzeugt ist, und dass das Feldgerät (F) aus dem Freigabecode (FC) die durchzuführende Funktion (FLi(SN)) ermittelt und
**dass** das Feldgerät (F) in einem Ausführungsschritt (14) in dem Fall, dass der von dem Feldgerät (F) empfangene Freigabecode (FC) als von der Serviceeinheit (S) erzeugt verifiziert ist, einen der durchzuführenden Funktion (FLi(SN)) entsprechenden ausführbaren Code (FLi(SN)CD) ausführt.

2. Verfahren (1) nach Anspruch 1, **dadurch gekennzeichnet, dass** auf der Serviceeinheit (S) mehrere Auswahllisten durchführbarer Funktionen (FL(SN)) mehrerer Feldgeräte (F) hinterlegt sind, dass im Auswahlschritt (9) das Prozessleitsystem (PCS) von der Serviceeinheit (S) die Auswahlliste durchführbarer Funktionen (FL(SN)) des Feldgeräts (F) mit der Kennung SN anfordert, dass die Serviceeinheit (S) dem Prozessleitsystem (PCS) die angeforderte Auswahlliste durchführbarer Funktionen (FL(SN)) des Feldgeräts (F) mit der Kennung SN zur Verfügung stellt, dass im Prozessleitsystem (PCS) aus der Auswahlliste durchführbarer Funktionen (FL(SN)) die auf dem Feldgerät (F) durchzuführende Funktion (FLi(SN)) ausgewählt wird.

3. Verfahren (1) nach Anspruch 1 oder 2, **dadurch gekennzeichnet, dass** in dem Feldgerät (F) die Auswahlliste durchführbarer Funktionen (FL(SN)) des Feldgerätes (F) mit der Kennung SN hinterlegt ist zusammen mit einer entsprechenden Beschreibung jeder einzelnen durchführbaren Funktion (FLi(SN)), dass in der Serviceeinheit (S) die Auswahlliste durchführbarer Funktionen (FL(SN)) des Feldgerätes (F) hinterlegt ist,
dass im Aufforderungsschritt (11) die Serviceeinheit (S) den Freigabecode (FC) zusammenstellt aus dem aktuellen abgeleiteten Zeitwert (CLS') der Serviceeinheit (S) und einer Angabe zur ausgewählten Funktionen (FLi(SN)) des Feldgerätes (F),
dass in dem Prüfschritt (13) das Feldgerät (F) aus dem übermittelten Freigabecode (FC) einen übermittelten abgeleiteten Zeitwert (CLS') der Serviceeinheit (S) ermittelt und den aktuellen abgeleiteten Zeitwert (CLF') des Feldgerätes (F) ermittelt und bei Übereinstimmung des übermittelten abgeleiteten Zeitwertes (CLS') der Serviceeinheit (S) mit dem aktuellen abgeleiteten Zeitwert (CLF') des Feldgerätes (F) den übermittelten Freigabecode (FC) als von der Serviceeinheit (S) erzeugt verifiziert und
dass in dem Ausführungsschritt (14) das Feldgerät (F) entsprechend der in dem Feldgerät (F) hinterlegten Beschreibung zu der übermittelten durchzuführenden Funktion (FLi(SN)) den korrespondierenden ausführbaren Code

(FLi(SN)CD) der durchzuführenden Funktion (FLi(SN)) ausführt.

4. Verfahren (1) nach Anspruch 3, **dadurch gekennzeichnet, dass** der aktuelle abgeleitete Zeitwert (CLS') auf der Serviceeinheit (S) und der aktuelle abgeleitete Zeitwert (CLF') auf dem Feldgeräte (F) ermittelt werden in zusätzlicher Abhängigkeit von einer feldgerätindividuellen Information für die durchzuführende Funktion (FLi(SN)), insbesondere wobei die Auswahlliste durchführbarer Funktionen (FL(SN)) des Feldgerätes (F) mit der Kennung SN die feldgerätindividuellen Informationen für die durchführbaren Funktionen (FL(SN)) umfasst oder die feldgerätindividuellen Informationen für die durchführbaren Funktionen (FL(SN)) jeweils aus der Beschreibung der durchführbaren Funktionen (FL(SN)) und der Feldgerätekennung SN des Feldgerätes (F) bestimmt werden.

5. Verfahren (1) nach Anspruch 3 oder 4, **dadurch gekennzeichnet, dass** der ausführbare Code (FLi(SN)CD) der durchzuführenden Funktion (FLi(SN)) selbst als Beschreibung der durchzuführenden Funktion (FLi(SN)) in dem Feldgerät (F) hinterlegt ist, oder dass der ausführbare Code (FLi(SN)CD) der durchzuführenden Funktion (FLi(SN)) aus der Beschreibung der durchzuführenden Funktion (FLi(SN)) im Feldgerät (F) erzeugt wird, insbesondere wobei die Beschreibung wenigstens eine der folgenden Angaben umfasst: Art der Funktion, Zeitdauer der Durchführbarkeit der Funktion, Häufigkeit der Durchführbarkeit der Funktion, Durchführfrequenz der Funktion, Auflösung des Ausgabewertes der Funktion.

6. Verfahren (1) nach Anspruch 1 oder 2, **dadurch gekennzeichnet, dass** im Aufforderungsschritt (11) die Serviceeinheit (S) aus der Angabe der durchzuführenden Funktion (FLi(SN)) den der durchzuführenden Funktion (FLi(SN)) entsprechenden ausführbaren Code (FLi(SN)CD) ermittelt, die Serviceeinheit (S) einen Hashwert $(Hash_S(FLi(SN)CD))$ aus dem ausführbaren Code (FLi(SN)CD) ermittelt und die Serviceeinheit (S) den Freigabecode (FC) ermittelt aus dem ausführbaren Code (FLi(SN)CD) und dem Hashwert $(Hash_S(FLi(SN)CD))$ aus dem ausführbaren Code (FLi(SN)CD), wobei zumindest der Hashwert $(Hash_S(FLi(SN)CD))$ oder der ausführbare Code von der Serviceeinheit (S) mit dem aktuellen abgeleiteten Zeitwert (CLS') der Serviceeinheit (S) als symmetrischem Schlüssel verschlüsselt wird.

7. Verfahren (1) nach Anspruch 6, **dadurch gekennzeichnet, dass** der aktuelle abgeleitete Zeitwert (CLS') auf der Serviceeinheit (S) und der aktuelle abgeleitete Zeitwert (CLF') auf dem Feldgeräte (F) ermittelt werden in zusätzlicher Abhängigkeit von einer eindeutigen Kennung des Feldgerätes F, insbesondere wird als eindeutige Kennung des Feldgerätes F die Feldgerätekennung SN des Feldgerätes (F) verwendet.

8. Verfahren (1) nach Anspruch 6 oder 7, **dadurch gekennzeichnet, dass** der Freigabecode (FC) auf der Serviceeinheit (S) zusammengestellt wird aus dem ausführbaren Code (FLi(SN)CD) und aus dem mit dem aktuellen abgeleiteten Zeitwert (CLS') der Serviceeinheit (S) als symmetrischem Schlüssel verschlüsselten Hashwert $(Hash_S(FLi(SN)CD))$ $(FC = [FLi(SN)CD; EC_{CLS'}(Hash_S(FLi(SN)CD))])$.

9. Verfahren (1) nach Anspruch 8, **dadurch gekennzeichnet, dass** in dem Prüfschritt (13) das Feldgerät (F) den verschlüsselten Teil $(EC_{CLS'}(Hash_S(FLi(SN)CD)))$ des empfangenen Freigabecodes (FC) mit dem aktuellen abgeleiteten Zeitwert (CLF') des Feldgerätes (F) als korrespondierendem symmetrischen Schlüssel entschlüsselt $(DC_{CLF'}(EC_{CLS'}))$, dass das Feldgerät (F) den aus der Entschlüsselung gewonnenen und auf der Serviceeinheit (S) ermittelten Hashwert $(Hash_S(FLi(SN)CD))$ vergleicht mit einem von dem Feldgerät (F) ermittelten Hashwert $(Hash_F(FLi(SN)CD))$ aus dem mit dem Freigabecode (FC) empfangenen ausführbaren Code (FLi(SN)CD) und bei Übereinstimmung der Hashwerte $(Hash_S, Hash_F)$ den übermittelten Freigabecode (FC) als von der Serviceeinheit (S) erzeugt verifiziert und das Feldgerät (F) in dem Ausführungsschritt den empfangenen ausführbaren Code (FLi(SN)CD) ausführt.

10. Verfahren (1) nach Anspruch 6 oder 7, **dadurch gekennzeichnet, dass** der Freigabecode (FC) auf der Serviceeinheit (S) zusammengestellt wird aus dem mit dem aktuellen abgeleiteten Zeitwert (CLS') der Serviceeinheit (S) als symmetrischem Schlüssel verschlüsselten Wertepaar $([Hash_S(FLi(SN)CD; FLi(SN)CD])$ aus dem ausführbaren Code (FLi(SN)CD) und dem Hashwert $(Hash_S(FLi(SN)CD))$ aus dem ausführbaren Code (FLi(SN)CD) $(FC = EC_{CLS'}[FLi(SN)CD; Hash_S(FLi(SN)CD)])$.

11. Verfahren (1) nach Anspruch 10, **dadurch gekennzeichnet, dass** in dem Prüfschritt (13) das Feldgerät (F) den empfangenen Freigabecode (FC) mit dem aktuellen abgeleiteten Zeitwert (CLF') des Feldgerätes (F) als korrespondierendem symmetrischen Schlüssel entschlüsselt $(DC_{CLF'}(FC))$, dass das Feldgerät (F) den aus der Entschlüsselung gewonnenen und auf der Serviceeinheit (S) ermittelten Hashwert $(Hash_S(FLi(SN)CD))$ vergleicht mit einem von dem Feldgerät (F) ermittelten Hashwert $(Hash_F(FLi(SN)CD))$ aus dem mit dem Freigabecode (FC) empfangenen ausführbaren Code (FLi(SN)CD) und bei Übereinstimmung der Hashwerte (Hash$_S$, Hash$_F$) den übermittelten Freigabecode (FC) als von der Serviceeinheit (S) erzeugt verifiziert und das Feldgerät (F) in dem Ausführungsschritt den empfangenen ausführbaren Code (FLi(SN)CD) ausführt.

12. Verfahren (1) nach einem der Ansprüche 1 bis 11, **dadurch gekennzeichnet, dass** der von der Serviceeinheit (S) von dem aktuellen Zeitwert (CLS) der Serviceeinheit (S) abhängige abgeleitete Zeitwert (CLS') und der von dem Feldgerät (F) von dem aktuellen Zeitwert (CLF) des Feldgeräts (F) abhängige abgeleitete Zeitwert (CLF') berechnet werden mit einer kryptografischen Hash-Funktion unter Verwendung eines zwischen dem Feldgerät (F) und der Serviceeinheit (S) vereinbarten geheimen Schlüssels.

13. Verfahren (1) nach einem der Ansprüche 1 bis 12, **dadurch gekennzeichnet, dass** für den Fall, dass in dem Prüfschritt (13) von dem Feldgerät (F) unter Verwendung des aktuellen abgeleiteten Zeitwerts (CLF') des Feldgerätes (F) eine Erzeugung des übermittelten Freigabecodes (FC) durch die Serviceeinheit (S) nicht verifiziert werden kann, das Feldgerät wenigstens einen vorangehenden Zeitwert (CLF) und den vorangehenden daraus abgeleiteten Zeitwert (CLF') zur Überprüfung verwendet und/oder das Feldgerät wenigstens einen zukünftigen Zeitwert (CLF) und den zukünftigen daraus abgeleiteten Zeitwert (CLF') zur Überprüfung der Erzeugung des übermittelten Freigabecodes (FC) durch die Serviceeinheit (S) verwendet, und bei erfolgreicher Verifikation der Erzeugung des übermittelten Freigabecodes (FC) durch die Serviceeinheit (S) mit einem vergangenen oder zukünftigen abgeleiteten Zeitwert (CLF'), die Verifikation als gültig bewertet wird

14. Verfahren (1) nach Anspruch 13, **dadurch gekennzeichnet, dass** die zeitliche Abweichung zwischen dem aktuellen abgeleiteten Zeitwert (CLF') und dem zur erfolgreichen Verifikation führenden vergangenen oder zukünftigen abgeleiteten Zeitwert (CLF') herangezogen wird zur Korrektur der Zeitzählvorrichtung des Feldgerätes (F) zwecks Synchronisation mit der Zeitzählvorrichtung der Serviceeinheit (S).

15. Verfahren (1) nach einem der Ansprüche 1 bis 14, **dadurch gekennzeichnet, dass** das Prozessleitsystem (PCS) der Serviceeinheit (S) im Auswahlschritt (9) neben der ausgewählte Funktion (FLi(SN)) auch einen zukünftigen Gültigkeitszeitpunkt mitteilt, dass die Serviceeinheit (S) aus dem aktuellen Zeitwert (CLS) ihrer Zeitzählvorrichtung (8) und der Zeitdifferenz zu dem zukünftigen Gültigkeitszeitpunkt einen zukünftigen aktuellen Zeitwert berechnet und diesen zukünftigen aktuellen Zeitwert für die Ermittlung des Freigabecodes (FC) als aktuellen Zeitwert (CLS) verwendet.

16. Verfahren (1) nach einem der Ansprüche 1 bis 15, **dadurch gekennzeichnet, dass** der Zahldienst (PAY) auf dem Prozessleitsystem (PCS) oder auf der Serviceeinheit (S) oder als separate Instanz, die mit dem Prozessleitsystem und/oder mit der Serviceeinheit (S) kommuniziert, implementiert ist.

17. Feldgerät (F) mit einer Recheneinheit (2) zur Ausführung einer durchzuführenden Funktion (FLi) des Feldgeräts (F), mit einer Kommunikationsschnittstelle (3) zum Datenaustausch mit einem Prozessleitsystem (PCS), **dadurch gekennzeichnet, dass** das Feldgerät (F) wenigstens eine Zeitzählvorrichtung (7) aufweist, die einen Zeitwert (CLF) des Feldgeräts (F) bereitstellt und dass die Recheneinheit (2) so programmiert ist, dass das Feldgerät (F) die das Feldgerät (F) betreffenden Schritte des Verfahrens (1) gemäß einem der Patentansprüche 1 bis 16 ausführen kann und im Betrieb des Feldgeräts (F) auch ausführt, insbesondere den Prüfschritt (13) und den Ausführungsschritt (14).

18. Serviceeinheit (S) mit einer Recheneinheit (6) und mit einer Zeitzählvorrichtung (8), wobei die Zeitzählvorrichtung (8) einen Zeitwert (CLS) der Serviceeinheit (S) bereitstellt und dass die Recheneinheit (6) so programmiert ist, dass die Serviceeinheit (S) die die Serviceeinheit (S) betreffenden Schritte des Verfahrens gemäß einem der Patentansprüche 1 bis 16 ausführen kann und im Betrieb der Serviceeinheit (S) auch ausführt, insbesondere den Aufforderungsschritt (11).

Fig. 1

Fig. 2

EP 3 893 065 A1

F　　　　　PCS　　　　　S　　　　　PAY

SN
CLF
↓
CLF'

CLS→CLS'
FL(1);FL(2);...;FL(SN)

FL(SN)?　　　9

FL(SN)

FL(SN)

FLi(SN)　　　　FLi(SN)

PAY(FLi(SN))

10

PAID(FLi(SN))

12

FC

FC(FLi(SN),CLS')

FC(FLi(SN),CLS')

13

11

Orig(FC,CLF')=S
↓✓
do(FLi(SN)CD)

14

**Fig. 3**

17

Fig. 4

Fig. 5

Fig. 6

**Europäisches Patentamt**
**European Patent Office**
**Office européen des brevets**

# EUROPÄISCHER RECHERCHENBERICHT

Nummer der Anmeldung

EP 21 16 5865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2016 106638 A1 (BALLUFF GMBH [DE]) 12. Oktober 2017 (2017-10-12) * Absatz [0005] * * Absatz [0012] - Absatz [0013] * * Absatz [0015] - Absatz [0017] * * Absatz [0019] * * Absatz [0022] - Absatz [0025] * * Absatz [0043] - Absatz [0047] * * Absatz [0049] - Absatz [0050] * * Absatz [0052] - Absatz [0053] * * Absatz [0055] * * Abbildungen 2-6 * ----- | 1-5,12, 16 | INV. G05B19/042 |
| X | DE 10 2015 121861 A1 (ENDRESS + HAUSER FLOWTEC AG [CH]) 22. Juni 2017 (2017-06-22) | 17,18 | |
| Y | * Absatz [0001] * * Absatz [0013] - Absatz [0014] * * Absatz [0034] - Absatz [0037] * * Absatz [0018] - Absatz [0024] * * Absatz [0039] - Absatz [0049] * * Abbildung 1 * ----- | 1-5,12, 16 | |
| | | | **RECHERCHIERTE SACHGEBIETE (IPC)** |
| A | DE 10 2005 053332 A1 (FLOWTEC AG [CH]) 10. Mai 2007 (2007-05-10) * Absatz [0019] * * Absatz [0023] * * Absatz [0059] * * Absatz [0061] * * Absatz [0065] - Absatz [0066] * ----- | 1-18 | G06Q H04L G05B |

Der vorliegende Recherchenbericht wurde für alle Patentansprüche erstellt

| Recherchenort | Abschlußdatum der Recherche | Prüfer |
|---|---|---|
| München | 19. August 2021 | Hristov, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 21 16 5865

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-08-2021

| Im Recherchenbericht angeführtes Patentdokument | Datum der Veröffentlichung | Mitglied(er) der Patentfamilie | Datum der Veröffentlichung |
|---|---|---|---|
| DE 102016106638 A1 | 12-10-2017 | KEINE | |
| DE 102015121861 A1 | 22-06-2017 | CN 108370375 A | 03-08-2018 |
| | | DE 102015121861 A1 | 22-06-2017 |
| | | EP 3391611 A1 | 24-10-2018 |
| | | US 2018357397 A1 | 13-12-2018 |
| | | WO 2017102211 A1 | 22-06-2017 |
| DE 102005053332 A1 | 10-05-2007 | AT 432489 T | 15-06-2009 |
| | | DE 102005053332 A1 | 10-05-2007 |
| | | EP 1946191 A1 | 23-07-2008 |
| | | US 2009210077 A1 | 20-08-2009 |
| | | WO 2007051837 A1 | 10-05-2007 |

EPO FORM P0461

Für nähere Einzelheiten zu diesem Anhang : siehe Amtsblatt des Europäischen Patentamts, Nr.12/82